# EUROPEAN PATENT SPECIFICATION

(11) **EP 1 769 992 B1**
(45) Date of publication and mention of the grant of the patent: **16.03.2011**
(21) Application number: 06019446.1
(22) Date of filing: 18.09.2006
(51) Int. Cl.: B60T 13/58, B60T 13/26

(54) **Trailer brake valve**
Anhängerbremsventil
Soupape de freinage pour une remorque

(30) Priority: 01.10.2005 DE 202005015482 U
(43) Date of publication of application: 04.04.2007
(73) Proprietor: AGCO GmbH, 87616 Marktoberdorf (DE)
(72) Inventor: Brockmann, Andreas, 87651 Bidingen (DE)
(74) Representative: Morrall, Roger

(56) References cited:
- WO-A-97/03871
- US-A- 3 790 807
- US-A- 4 054 325
- US-A- 4 756 390
- US-A- 5 915 797
- US-A1- 2002 195 870

## Description

The invention relates to a trailer brake valve for coupling a pneumatic brake system of a tractor vehicle to a hydraulically-actuated brake circuit of a trailer, wherein the brake system of the tractor vehicle has a service brake circuit for the service brake and a parking brake circuit for the parking brake, the trailer brake valve having a service brake piston which can be displaced by pressure in the service brake circuit, which acts on a control piston, which, as a function of the setting of the service brake piston, influences the brake pressure in the brake circuit of the trailer.

Tractor vehicles are frequently used to tow trailers. In order for such a combination to remain under control if the tractor vehicle is braked sharply, the trailer must also be braked to the same degree as the tractor vehicle. Known trailers are equipped for this purpose with a braking system of which the braking circuit is connected to the service brake circuit of the tractor vehicle. The coupling of both brake circuits is effected as a rule by means of a trailer brake valve arranged on the tractor vehicle, the purpose of which is to build up brake pressure in the brake circuit of the trailer which has the result of producing a braking effect on the trailer which is comparable to the braking effect on the tractor vehicle. As long as the service brake is actuated, therefore, the trailer will also be braked, even when the combination is stationary. If, on the other hand, a tractor/trailer combination is parked for an extended period, the combination will only be secured by the parking brake of the tractor vehicle, which, however, does not incur any braking effect on the trailer. When the combination is parked on inclined surfaces, in particular, this fact can lead to serious risk to other traffic.

A state of the art trailer braking system is described in US 2002/0195970 A1.

The object of the invention is seen as providing a trailer brake valve of the type described in the preamble, which not only makes it possible for a trailer to be braked jointly with the tractor vehicle by actuating the service brake, but also by actuating the parking brake when the combination is stationary.

This object is achieved by a device which, with the parking brake actuated, takes effect on the control piston in the sense of building up braking pressure in the brake circuit of the trailer. As a result, the trailer is completely secured during the parking of the combination without further action on the part of the driver. Additional measures or a separate actuating device for the braking of the trailer can be done away with.

A technically simple trailer brake valve is realised by the proposal that a parking brake piston be allocated to the service brake piston, which, when the parking brake is actuated, by simulating actuation of the service brake, displaces the service brake piston under the influence of an auxiliary force, wherein to the largest possible extent use is made of the components which are present anyway.

The feature wherein the service brake piston and the parking brake piston are located in coaxial cylinder chambers located behind one another, and the parking brake piston can be displaced by means of a piston rod, allows for a very compact design of the trailer brake valve to be achieved. The feature of Claim 4 by which the cylinder chambers are located in a common cylinder and are separated by a wall, through which the piston rod extends with pressure-tight effect, ensures an arrangement which is simple to manufacture.

The feature wherein, when the parking brake is actuated, the parking brake piston is pushed against the service brake piston by the auxiliary force, is subject to the precondition that travel operation with the vehicle combination is only possible for as long as adequate pressure is present in the parking brake circuit, and the parking brake piston does not have any contact with the service brake piston. If the pressure in the parking brake circuit falls below a predetermined value, e.g. because the parking brake circuit is leaking, the trailer will be automatically braked.

A further effect achieved with the feature from Claim 6 lies in the fact that it is possible, despite the parking brake being actuated on the tractor vehicle, whether this be parked with or without a trailer, for the outlet of the trailer brake valve connected to the brake circuit of the trailer to be rendered temporarily pressureless. This allows for easy connection or release of the hydraulic rapid-action couplings, by means of which the brake circuit of the trailer is connected to the tractor vehicle.

The invention is explained hereinafter on the basis of a simplified circuit diagram of the brake systems of a tractor/trailer combination.

A tractor vehicle is equipped with a pneumatic braking system, which has a service brake circuit and a parking brake circuit. The service brake circuit contains a service brake valve 2 actuated by a brake pedal 1, which brake valve is located in a line from a compressed-air tank 3 to the service brake 4 of the front axle of the vehicle and in a line from a compressed-air tank 5 to the service brakes 6 of the rear axle. The service brake circuit also includes a parking valve 7, which is located in a line from a compressed-air tank 8 to a switchover valve 9, by means of which the service brakes are actuated automatically by a vehicle master computer 10 if the brake pedal 1 is actuated for longer than a predetermined period of time with the vehicle at a standstill. The parking brake circuit contains a manually actuated parking brake valve 11, which is located in a line from a compressed-air tank 12 to the parking brakes 13 of the vehicle. The compressed-air tanks 3, 5, 8, 12 are connected to a compressed-air generating system 14, which maintains these tanks in a charged state.

Located on the tractor vehicle is a trailer brake valve 15, which is connected at P to the hydraulic system 16 of the vehicle. The trailer brake valve 15 provides for a controlled pressure build-up at an outlet B, which is connected to the vehicle-side half 17a of a hydraulic rapid-action coupling 17. In the case of a trailer with a single-circuit braking system, its hydraulic brake circuit is connected to the trailer brakes 18. For this purpose, the trailer brake valve 15 contains an input pressure balance valve 19 and a control piston 20, which is in operational connection with a service brake piston 21. The modes of operation of these components of the trailer brake valve 15 are not described individually, since their arrangement and mode of function are inherently known. The important factor in this situation is that the pressure at the output B is dependent on the setting of the control piston 20, and this in turn is dependent on the setting of the service brake piston 21, the piston rod 22 of which is constantly in direct contact with the control piston 20. The chamber 23 facing away from the control piston 20, behind the service brake piston 21 is connected by means of a line 24 to the service brake circuit of the front axle, so that, when the brake pedal 1 is actuated, the pneumatic pressure which is built up in that situation in the service brake circuit is converted into a directly proportional hydraulic pressure at the outlet B.

In order for actuation of the parking brake 11 to brake not only the tractor vehicle but also the trailer, a device is provided which, when the parking brake 11 is actuated, moves the control piston 20 in the sense of a pressure build-up at the outlet B. This device consists of a parking brake piston 25 which can be displaced in a chamber 26 which runs coaxially to the chamber 23, and in which the service brake piston 21 can be displaced. Both chambers 23, 26 are only separated from each other by a wall 27.

The parking brake piston 25 has a piston rod 28, which extends through the wall 27 in a pressure-tight manner. In the left-hand end position of the parking brake piston 21 shown, the piston rod 28 itself does not then have any contact with the service brake piston 21, if this is located in its left end position shown when the service brake is not actuated. The chamber 26 in front of the parking brake piston 25 is connected to the parking brake circuit by means of a switchover valve 29, which, if the parking brake is not actuated, is subjected to pressure via the parking brake valve 11. In this case the parking brake piston 25 is pushed against the force of a spring 30 into its left end position. By actuating the parking brake valve 11, the parking brake circuit is vented, with the result that the parking brake piston 25, with its piston rod 28, is pushed under the force of the spring 30 to the right against the service brake piston 21. This in turn displaces the control piston 20 accordingly, a predetermined pressure being generated at the outlet B and in the brake circuit of a trailer being towed, which will reliably keep the trailer at a standstill.

If it is intended that a trailer is to be disconnected in this operational state, and in this situation the brake circuit of the trailer is to be disconnected from the trailer brake valve 15, or if it is intended that a trailer is to be coupled up to a parked tractor vehicle with the parking brake actuated, this is not possible, because the hydraulic quick-action coupling 17, or at least its coupling half 17a on the vehicle side, is under pressure and this prevents the release or connection of the coupling half 17b on the trailer side to the half on the vehicle side. In order nevertheless to be able to carry out these actions, an electrically actuated valve 31 is provided between the compressed-air tank 8 and the switchover valve 29, which, if required by the driver, can be subjected to current by the actuation of a switch connected to the vehicle master computer 10, and, in the position under current, subjects the parking brake piston 25 to pressure. This moves to the left against the force of the spring 30, and releases the service brake piston 21, the outlet B of the trailer brake valve 15 being rendered free of pressure.

The quick-action coupling 17 can now be connected or released without any difficulty. Thereafter, by repeatedly actuating the switch, the valve 31 can be switched so as to be de-energised, whereupon air is vented from the chamber 26 via the parking brake valve 11, and the parking brake piston 25 moves the control piston 20, via the service brake piston 21, into the position in which the outlet B is under pressure.

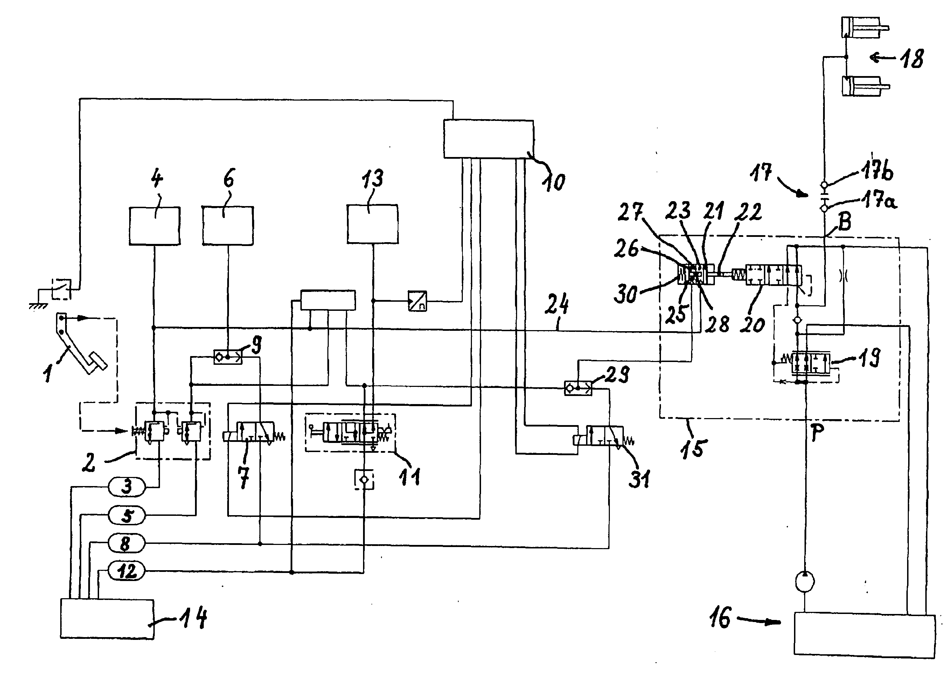

## Claims

1. Trailer brake valve for coupling a pneumatic brake system of a tractor vehicle to a hydraulically-actuated brake circuit of a trailer, wherein the brake system of the tractor vehicle has a service brake circuit for a service brake (4, 6) and a parking brake circuit for a parking brake (13), the trailer brake valve (15) having a service brake piston (21) which can be displaced by pressure in the service brake circuit, which acts on a control piston (20), which, as a function of the setting of the service brake piston, influences the brake pressure in the brake circuit of the trailer, the trailer brake valve being **characterised by** a device which, with the parking brake (13) actuated, acts on the control piston (20) in the sense of building up brake pressure in the brake circuit of the trailer.

2. Trailer brake valve according to Claim 1, **characterised by** the provision of a parking brake piston (25) which, with the parking brake (13) actuated, when actuation of the service brake (4, 6) is simulated, displaces the service brake piston (21) under the influence of an auxiliary force.

3. Trailer brake valve according to Claims 1 and 2, **characterised in that** the service brake piston (21) and the parking brake piston (25) are located in coaxial cylinder chambers (23, 26) located one behind another, and the service brake piston (21) can be displaced by a piston rod (28) of the parking brake piston (25).

4. Trailer brake valve according to Claims 1 to 3, **characterised in that** the cylinder chambers (23, 26) are located in a common housing and are separated from one another by a wall (27), through which the piston rod (28) of the parking brake piston (25) extends in a pressure tight manner.

5. Trailer brake valve according to Claims 2 to 4, **characterised in that** the parking brake piston (25), with the parking brake (13) actuated, is pushed by the auxiliary force against the service brake piston (21).

6. Trailer brake valve according to Claims 1 to 5, **characterised in that** the cylinder chamber (26) is connected to the parking brake circuit and can be connected via a switchover valve (29) to a compressed-air tank (8), and **in that** the side of the parking brake piston (25) facing away from the chamber (26) is loaded by the force of a pre-tensioned spring (30), which, when the parking brake circuit is not under pressure, presses the parking brake piston (25) by means of its piston rod (28) against the service brake piston (21).

## Patentansprüche

1. Anhängerbremsventil zur Kopplung eines pneumatischen Bremssystems eines Zugfahrzeugs mit einem hydraulisch betätigten Bremskreis eines Anhängers, wobei das Bremssystem des Zugfahrzeugs einen Betriebsbremskreis für eine Betriebsbremse (4, 6) und einen Parkbremskreis für eine Parkbremse (13) besitzt, das Anhängerbremsventil (15) einen Betriebsbremskolben (21) besitzt, der durch Druck in dem Betriebsbremskreis bewegt werden kann, der auf einen Steuerkolben (20) wirkt, der als eine Funktion der Einstellung des Betriebsbremskolbens den Bremsdruck in dem Bremskreis des Anhängers beeinflusst, **dadurch gekennzeichnet, dass** das Anhängerbremsventil eine Einrichtung besitzt, die bei Betätigung der Parkbremse (13) auf den Steuerkolben (20) wirkt im Sinne eines Aufbaus von Bremsdruck in dem Bremskreis des Anhängers.

2. Anhängerbremsventil nach Anspruch 1, **dadurch gekennzeichnet, dass** ein Parkbremskolben (25) vorgesehen ist, der bei Betätigung der Parkbremse (13) und Simulation der Betätigung der Betriebsbremse (4, 6) unter dem Einfluss einer Hilfskraft den Betriebsbremskolben (21) bewegt.

3. Anhängerbremsventil nach Anspruch 1 oder 2, **dadurch gekennzeichnet, dass** der Betriebsbremskolben (21) und der Parkbremskolben (25) in koaxialen Zylinderkammern (23, 26) angeordnet sind, die hintereinander angeordnet sind, und der Betriebsbremskolben (21) durch eine Kolbenstange (28) des Parkbremskolbens (25) bewegt werden kann.

4. Anhängerbremsventil nach einem der Ansprüche 1 bis 3, **dadurch gekennzeichnet, dass** die Zylinderkammern (23, 26) in einem gemeinsamen Gehäuse angeordnet sind und durch eine Wandung (27) voneinander getrennt sind, durch die sich die Kolbenstange (28) des Parkbremskolbens (25) in druckdichter Weise erstreckt.

5. Anhängerbremsventil nach einem der Ansprüche 2 bis 4, **dadurch gekennzeichnet, dass** der Parkbremskolben (25) bei betätigter Parkbremse (13) durch die Hilfskraft gegen den Betriebsbremskolben (21) gedrückt wird.

6. Anhängerbremsventil nach einem der Ansprüche 1 bis 5, **dadurch gekennzeichnet, dass** die Zylinderkammer (26) mit dem Parkbremskreis verbunden ist und über ein Wechselventil (29) mit einem Drucklufttank (8) verbunden werden kann, und dass die Seite des Parkbremskolbens (25), die von der Kammer (26) weg weist, von der Kraft einer vorgespannten Feder (30) beaufschlagt ist, die, wenn sich der Parkbremskreis nicht unter Druckbeaufschlagung befindet, den Parkbremskolben (25) mittels dessen Kolbenstange (28) gegen den Betriebsbremskolben (21) presst.

## Revendications

1. Vanne de freinage de remorque destinée à coupler un dispositif de freinage pneumatique d'un véhicule tracteur à un circuit de freinage hydraulique d'une remorque, dans laquelle le dispositif de freinage du véhicule tracteur comporte un circuit de frein de service pour un frein de service (4, 6) et un circuit de frein de parking pour un frein de parking (13), la vanne de freinage de remorque (15) comportant un piston de frein de service (21) qui peut être déplacé par une pression dans le circuit de frein de service, qui agit sur un piston de commande (20), qui, en fonction du réglage du piston de frein de service, influence la pression de freinage dans le circuit de frein de la remorque, la vanne de freinage de remorque étant **caractérisée par** un dispositif qui, le frein de parking (13) étant activé, agit sur le piston de commande (20) dans le sens de l'établissement d'une pression de freinage dans le circuit de frein de la remorque.

2. Vanne de freinage de remorque selon la revendication 1, **caractérisée par** la présence d'un piston de frein de parking (25) qui, le frein de parking (13) étant activé, lorsque l'activation du frein de service (4, 6) est simulée, déplace le piston de frein de service (21) sous l'influence d'un effort auxiliaire.

3. Vanne de freinage de remorque selon les revendications 1 et 2, **caractérisée en ce que** le piston de frein de service (21) et le piston de frein de parking (25) sont situés dans des chambres de cylindre coaxiales (23, 26) situées l'une derrière l'autre, et le piston de frein de service (21) peut être déplacé par une tige de piston (28) du piston de frein de parking (25).

4. Vanne de freinage de remorque selon les revendications 1 à 3, **caractérisée en ce que** les chambres de cylindre (23, 26) sont situées dans un logement commun et sont séparées l'une de l'autre par une paroi (27), à travers laquelle la tige de piston (28) du piston de frein de parking (25) s'étend d'une manière étanche à la pression.

5. Vanne de freinage de remorque selon les revendications 2 à 4, **caractérisée en ce que** le piston de frein de parking (25), le frein de parking (13) étant activé, est poussé par l'effort auxiliaire contre le piston de frein de service (21).

6. Vanne de freinage de remorque selon les revendications 1 à 5, **caractérisée en ce que** la chambre de cylindre (26) est raccordée au circuit de frein de parking et peut être raccordée par l'intermédiaire d'une vanne de commutation (29) à un réservoir d'air comprimé (8), et **en ce que** la face du piston de frein de parking (25) opposée à la chambre (26) est chargée par l'effort d'un ressort précontraint (30), qui, lorsque le circuit de frein de parking n'est pas sous pression, applique le piston de frein de parking (25) au moyen de sa tige de piston (28) contre le piston de frein de service (21).
